# EUROPÄISCHE PATENTSCHRIFT

(11) **EP 2 924 536 B1**
(45) Veröffentlichungstag und Bekanntmachung des Hinweises auf die Patenterteilung: **18.05.2016**
(21) Anmeldenummer: 14162249.8
(22) Anmeldetag: 28.03.2014
(51) Int. Cl.: G06F 1/16, B32B 37/10, G02F 1/1333, G06F 3/041

(54) **Verfahren und Vorrichtung zum Befestigen einer Schutzplatte an einem Display**
Method and device for fixing a protective panel to a display
Procédé et dispositif destinés à la fixation d'une plaque de protection sur un écran

(43) Veröffentlichungstag der Anmeldung: 30.09.2015
(73) Patentinhaber: RAMPF Production Systems GmbH & Co. KG, 78658 Zimmern o. R. (DE)
(72) Erfinder: Haag, Gerd, 78655 Dunningen-Seedorf (DE)
(74) Vertreter: Westphal, Mussgnug & Partner Patentanwälte mbB

(56) Entgegenhaltungen:
- EP-A2- 2 695 923
- WO-A1-2013/016859
- US-A1- 2007 051 462

## Beschreibung

Die Erfindung betrifft ein Verfahren sowie eine Vorrichtung zum Befestigen einer Schutzplatte an einem Display, insbesondere einem Touch-Display.

Zum Befestigen einer Schutzplatte an einem Display, insbesondere an einem Touch-Display, ist es bekannt, zunächst ein Bondingmaterial, beispielsweise in Form eines flüssigen Ein- oder Zweikomponentenklebers, auf das Display aufzubringen und anschließend die Schutzplatte auf das Display aufzulegen. Die Verwendung eines Bondingmaterials zur Verbindung der Schutzplatte mit dem Display weist den Vorteil auf, dass die Transmission verbessert wird, sodass das Display klarer wirkt, Reflexionen vermieden werden sowie die Stabilität des Displays mit der daran angeordneten Schutzplatte verbessert wird. Problematisch dabei ist jedoch, dass sich beim Aufbringen des flüssigen Bondingmaterials sowie dem anschließenden Fügen der Schutzplatte Lufteinschlüsse bilden können, welche die Qualität des Bildes beeinträchtigen.

Ein mögliches Verfahren zur Befestigung einer Schutzplatte an einem Touch-Display ist in der US 2013/0063967 A1 offenbart. Weitere derartige Verfahren sind in der WO2013/016859 A1, EP 2 695 923 A2 und US 2007/0051462 A1 offenbart.

Die Aufgabe der Erfindung besteht daher darin, ein Verfahren sowie eine Vorrichtung zum Befestigen einer Schutzplatte an einem Display, insbesondere einem Touch-Display, bereit zu stellen, mit welchem das Auftreten von Lufteinschlüssen in dem Bondingmaterial verringert, vorzugsweise weitestgehend vermieden werden kann.

Die Aufgabe wird erfindungsgemäß gelöst durch ein Verfahren zum Befestigen einer Schutzplatte an einem Display, insbesondere einem Touch-Display, mit den Merkmalen des Patentanspruchs 1 sowie eine Vorrichtung zum Befestigen einer Schutzplatte an einem Display, insbesondere einem Touch-Display, mit den Merkmalen des Patentanspruchs 7.

Vorteilhafte Ausgestaltungen und Weiterbildungen der Erfindung sind in den abhängigen Ansprüchen angegeben.

Das erfindungsgemäße Verfahren zum Befestigen einer Schutzplatte an einem Display, insbesondere einem Touch-Display, weist die folgenden Schritte auf: Aufbringen eines insbesondere flüssigen oder pastösen Bondingmaterials auf das Display und Auflegen der Schutzplatte auf das Display, wobei der Schritt des Auflegens der Schutzplatte auf das Display unter Unterdruck oder mit anderen Worten in einem Raum, in welchem Unterdruck herrscht, erfolgt. Als Unterdruck wird dabei ein Druck bezeichnet, welcher geringer als der Atmosphärendruck ist.

Dadurch, dass der Schritt des Auflegens der Schutzplatte auf das Display in einer Umgebung erfolgt, in welcher ein Unterdruck herrscht, erfolgt, kann einerseits weniger Luft beim Auflegen der Schutzplatte auf das Display in dem Bondingmaterial Lufteinschlüsse bilden. Andererseits wird, sobald das Display mit der daran angeordneten Schutzplatte aus der Unterdruckumgebung in eine Umgebung mit höherem Druck, insbesondere in eine Umgebung mit Atmosphärendruck, überführt wird, werden die möglicherweise in dem Bondingmaterial eingeschlossenen Luftblasen auf einen Bruchteil verringert, sodass keine oder nahezu keine Lufteinschlüsse in dem Bondingmaterial zu sehen sind.

Vorteilhafterweise ist der Unterdruck geringer als 40 mbar und beträgt beispielsweise etwa 30 mbar. Bereits bei derartigen Unterdrücken können signifikante Verbesserungen hinsichtlich der verbleibenden Lufteinschlüsse realisiert werden. Besonders bevorzugt ist der Unterdruck geringer als 10 mbar und beträgt beispielsweise etwa 5 mbar.

Eine bevorzugte Weiterbildung der Erfindung sieht vor, dass auch der Schritt des Aufbringens des Bondingmaterials auf das Display unter Unterdruck erfolgt, wodurch die Wahrscheinlichkeit zum Auftreten von Lufteinschlüssen in dem Bondingmaterial weiter verringert wird.

Vorteilhafterweise erfolgt das Auflegen der Schutzplatte auf das Display durch Aufsetzen oder Fallenlassen der Schutzplatte auf das Display aus geringer Höhe, beispielsweise aus einer Höhe von weniger als 5 mm, vorzugsweise aus einer Höhe von weniger als 1 mm. Gemäß dem Stand der Technik ist das Auflegen der Schutzplatte auf das Display extrem zeitintensiv, da die Schutzplatte mittels eines Greifers langsam an das Display, auf welchem das Bondingmaterial angeordnet ist, angenähert wird, um sicherzustellen, dass sich das flüssige oder pastöse Bondingmaterial gleichmäßig in dem Zwischenraum verteilt. Dieser Vorgang kann gemäß dem Stand der Technik mehr als 60 Sekunden in Anspruch nehmen. Da erfindungsgemäß durch das Auflegen der Schutzplatte auf das Display unter Unterdruck die Wahrscheinlichkeit für das Auftreten von Lufteinschlüssen verringert wird, besteht die Möglichkeit, den Auflegeprozess zu beschleunigen und insbesondere das Auflegen der Schutzplatte auf das Display durch Fallenlassen der Schutzplatte auf das Display aus geringer Höhe zu realisieren.

Vorzugsweise weist das Display Abstandshalter für die Schutzplatte auf, welche den nötigen Freiraum für das Bondingmaterial sicherstellen. Diese Abstandshalter werden gemäß einer bevorzugten Ausführungsform der Erfindung vor dem Aufbringen des Bondingmaterials vermessen, um das benötigte Volumen des Bondingmaterials bestimmen zu können. Dadurch wird es ermöglicht, das Volumen an Bondingmaterial auf das jeweilige Display abzustimmen, um sicherzustellen, dass einerseits nicht zu wenig Bondingmaterial verwendet wird, welches zu fehlerhaften Überdeckungen des Displays führen könnte, andererseits jedoch auch nicht zuviel Bondingmaterial zu verwenden, welches an den Rändern des Displays austreten könnte.

Das Bondingmaterial, welches vorteilhafterweise ein flüssiger Ein- oder Zweikomponentenkleber ist, wird vorzugsweise ausgehärtet, besonders bevorzugt mittels UV-Licht oder Wärme. Dabei erfolgt das Aushärten insbesondere unter Atmosphärendruck, damit die gegebenenfalls in dem Bondingmaterial vorhandenen Lufteinschlüsse bei Überführen des Displays aus dem Raum, in welchem Unterdruck herrscht, in den Raum, in welchem ein größerer Druck, insbesondere der Atmosphärendruck, herrscht, vor dem Aushärten auf einen Bruchteil verringert werden können.

Die erfindungsgemäße Vorrichtung zum Befestigen einer Schutzplatte an einem Display, insbesondere einem Touch-Display, mit einer ersten Vorrichtung zum Aufbringen des Bondingmaterials auf das Display und einer zweiten Vorrichtung zum Auflegen der Schutzplatte auf das Display zeichnet sich dadurch aus, dass die zweite Vorrichtung in einer Vakuumkammer angeordnet ist, in welcher ein Enddruck erzeugbar ist, welcher kleiner ist als der Druck außerhalb der Vakuumkammer.

Dadurch, dass die zweite Vorrichtung in einer Vakuumkammer angeordnet ist, kann der Schritt des Auflegens der Schutzplatte auf das Display in einer Umgebung erfolgen, in welcher ein Unterdruck herrscht, so dass einerseits weniger Luft beim Auflegen der Schutzplatte auf das Display in dem Bondingmaterial Lufteinschlüsse bilden kann. Andererseits werden, sobald das Display mit der daran angeordneten Schutzplatte aus der Unterdruckumgebung in eine Umgebung mit höherem Druck, insbesondere in eine Umgebung mit Atmosphärendruck, überführt wird, die möglicherweise in dem Bondingmaterial eingeschlossenen Luftblasen auf einen Bruchteil verringert, sodass keine oder nahezu keine Lufteinschlüsse in dem Bondingmaterial zu sehen sind.

Vorteilhafterweise ist der Enddruck der Vakuumkammer kleiner als 40 mbar und beträgt beispielsweise etwa 30 mbar. Bereits bei derartigen Unterdrücken können signifikante Verbesserungen hinsichtlich der verbleibenden Lufteinschlüsse realisiert werden. Besonders bevorzugt ist der Unterdruck geringer als 10 mbar und beträgt beispielsweise etwa 5 mbar.

Gemäß einer bevorzugten Ausführungsform der Erfindung ist zusätzlich auch die erste Vorrichtung in der Vakuumkammer angeordnet. Dadurch kann die Wahrscheinlichkeit für ein Auftreten von Lufteinschlüssen weiter verringert werden.

Eine besonders bevorzugte Weiterentwicklung der Erfindung sieht vor, dass die Vorrichtung ein Warentransportsystem aufweist, mittels welchem ein oder mehrere Displays und die darin anzubringenden Schutzplatten der Vakuumkammer zugeführt werden. Das Warentransportsystem erlaubt eine automatisierte Bearbeitung und kann insbesondere das Display sowie die daran anzubringende Schutzplatte innerhalb der Vakuumkammer transportieren, ohne dass die Vakuumkammer geöffnet werden müsste.

Vorzugsweise weist die Vakuumkammer eine Eingangsöffnung auf, vor welcher wenigstens eine Eingangsschleuse angeordnet ist. Die Eingangsschleuse ermöglicht, dass innerhalb der Vakuumkammer der gewünschte Enddruck aufgebaut werden kann und das Display sowie die Schutzplatte durch die Eingangsschleuse in die Vakuumkammer eingebracht werden können, ohne dass der Enddruck in der Vakuumkammer jedes Mal nach Einbringen eines Displays neu aufgebaut werden muss.

Vorzugsweise weist die Vakuumkammer eine Ausgangsöffnung auf, hinter welcher wenigstens eine Ausgangsschleuse angeordnet ist. Auch das Verwenden einer Ausgangsschleuse ermöglicht, dass in der Vakuumkammer ein gewünschter Enddruck aufgebaut werden kann, welcher zum Ein- oder Ausbringen des zu bearbeitenden Displays nicht jedes Mal neu aufgebaut werden muss.

Gemäß einer bevorzugten Ausführungsform der Erfindung sind vor der Eingangsöffnung eine erste und eine zweite Eingangsschleuse angeordnet, wobei der Druck in der ersten Eingangsschleuse zwischen dem Umgebungsdruck und einem Zwischendruck einstellbar ist, der Druck in der zweiten Eingangsschleuse zwischen dem Zwischendruck und dem Enddruck der Vakuumkammer einstellbar ist und der Zwischendruck kleiner als der Umgebungsdruck und größer als der Enddruck der Vakuumkammer ist. Die erste und die zweite Eingangsschleuse sind dabei insbesondere hintereinander angeordnet. Dadurch wird es ermöglicht, ein Display mit daran anzubringender Schutzplatte zunächst in die erste Eingangsschleuse einzubringen, in dieser den Druck vom Umgebungsdruck auf den Zwischendruck zu reduzieren, anschließend das Display mit der daran anzubringenden Schutzplatte aus der ersten Eingangsschleuse in die zweite Eingangsschleuse zu überführen, den Druck in der zweiten Eingangsschleuse von dem Zwischendruck auf den Enddruck zu reduzieren und anschließend das Display sowie die Schutzplatte in die Vakuumkammer einzuführen. Einerseits bietet dies die Möglichkeit, den Druck stufenweise zu verringern und nicht bei jeder Öffnung einer einzigen Schleuse die vollständige Druckdifferenz zwischen Umgebungsdruck und Enddruck erzeugen zu müssen. Andererseits bietet dies auch die Möglichkeit von größeren Taktraten bei der Bearbeitung des Displays.

Eine vorteilhafte Weiterbildung der Erfindung sieht vor, dass hinter der Ausgangsöffnung eine erste und eine zweite Ausgangsschleuse insbesondere hintereinander angeordnet sind, wobei der Druck in der ersten Ausgangsschleuse zwischen einem Zwischendruck und einem Enddruck der Vakuumkammer einstellbar ist, der Druck in der zweiten Ausgangsschleuse zwischen dem Umgebungsdruck und dem Zwischendruck einstellbar ist, und der Zwischendruck kleiner als der Umgebungsdruck und größer als der Enddruck der Vakuumkammer ist. Einerseits bietet dies ebenso wie mehrere Eingangsschleusen die Möglichkeit, den Druck stufenweise zu erhöhen und nicht bei jeder Öffnung einer einzigen Schleuse die vollständige Druckdifferenz zwischen Umgebungsdruck und Enddruck erzeugen zu müssen. Andererseits bietet dies auch die Möglichkeit von größeren Taktraten bei der Bearbeitung des Displays.

Vorzugsweise beträgt der Zwischendruck zwischen etwa 100 mbar und 40 mbar, beispielsweise etwa 20 mbar.

Gemäß einer bevorzugten Ausführungsform der Erfindung weist das Display Abstandshalter für die Schutzplatte und die Vorrichtung eine dritte Vorrichtung zum Ausmessen der Abstandshalter und zum Bestimmen des benötigten Volumens an Bondingmaterial auf. Dadurch wird es ermöglicht, das Volumen an Bondingmaterial auf das jeweilige Display abzustimmen.

Die Erfindung wird anhand der nachfolgenden Figuren ausführlich erläutert. Es zeigen
- Fig. 1: eine schematische Darstellung eines Ausführungsbeispieles einer erfindungsgemäßen Vorrichtung zum Befestigen einer Schutzplatte an einem Display in einer Seitenansicht (a) und einer Draufsicht (b) mit der schematischen Darstellung des Ablaufprozesses zum Befestigen der Schutzplatte an dem Display in einem ersten Schritt,
- Fig. 2: die Vorrichtung gemäß Figur 1 mit der schematischen Darstellung eines weiteren Schrittes des Befestigungsprozesses, nämlich dem Einbringen eines Warenträgers in die erste Eingangsschleuse,
- Fig. 3: die Vorrichtung gemäß Figur 1 mit der schematischen Darstellung eines weiteren Schrittes des Befestigungsprozesses, nämlich dem Einbringen des Warenträgers aus der ersten Eingangsschleuse in die zweite Eingangsschleuse und dem nachführen eines weiteren Warenträgers in die erste Eingangsschleuse,
- Fig. 4: die Vorrichtung gemäß Figur 1 mit der schematischen Darstellung eines weiteren Schrittes des Befestigungsprozesses, nämlich dem Einbringen des Warenträgers aus der zweiten Eingangsschleuse in die Vakuumkammer und dem Nachführen weiterer Warenträger,
- Fig. 5: die Vorrichtung gemäß Figur 1 mit der schematischen Darstellung eines weiteren Schrittes des Befestigungsprozesses, nämlich dem Ausrichten des Warenträgers relativ zur ersten Vorrichtung,
- Fig. 6: die Vorrichtung gemäß Figur 1 mit der schematischen Darstellung eines weiteren Schrittes des Befestigungsprozesses, nämlich dem Absenken der ersten Vorrichtung,
- Fig. 7: die Vorrichtung gemäß Figur 1 mit der schematischen Darstellung eines weiteren Schrittes des Befestigungsprozesses, nämlich dem Aufbringen von Bondingmaterial auf das Display mittels der ersten Vorrichtung,
- Fig. 8: die Vorrichtung gemäß Figur 1 mit der schematischen Darstellung eines weiteren Schrittes des Befestigungsprozesses, nämlich dem Anheben der ersten Vorrichtung und dem Ausrichten des ersten Warenträgers,
- Fig. 9: die Vorrichtung gemäß Figur 1 mit der schematischen Darstellung eines weiteren Schrittes des Befestigungsprozesses, nämlich dem Überführen des ersten Warenträgers vor der ersten Vorrichtung zur zweiten Vorrichtung und dem Nachführen weiterer Warenträger,
- Fig. 10: die Vorrichtung gemäß Figur 1 mit der schematischen Darstellung eines weiteren Schrittes des Befestigungsprozesses, nämlich dem Ausrichten des ersten Warenträgers relativ zur zweiten Vorrichtung und dem Ausrichten des zweiten Warenträgers relativ zur ersten Vorrichtung,
- Fig. 11: die Vorrichtung gemäß Figur 1 mit der schematischen Darstellung eines weiteren Schrittes des Befestigungsprozesses, nämlich dem Absenken der zweiten Vorrichtung auf die auf dem ersten Warenträger angeordnete Schutzplatte und dem Absenken der ersten Vorrichtung auf das auf dem zweiten Warenträger angeordnete Display,
- Fig. 12: die Vorrichtung gemäß Figur 1 mit der schematischen Darstellung eines weiteren Schrittes des Befestigungsprozesses, nämlich dem Aufbringen von Bondingmaterial auf das auf dem zweiten Warenträger angeordnete Display,
- Fig. 13: die Vorrichtung gemäß Figur 1 mit der schematischen Darstellung eines weiteren Schrittes des Befestigungsprozesses, nämlich dem Anheben der auf dem ersten Warenträger angeordneten Schutzplatte mittels der zweiten Vorrichtung und dem Anheben der ersten Vorrichtung,
- Fig. 14: die Vorrichtung gemäß Figur 1 mit der schematischen Darstellung eines weiteren Schrittes des Befestigungsprozesses, nämlich dem Positionieren der Schutzplatte mittels der zweiten Vorrichtung oberhalb des auf dem ersten Warenträger angeordneten Displays,
- Fig. 15: die Vorrichtung gemäß Figur 1 mit der schematischen Darstellung eines weiteren Schrittes des Befestigungsprozesses, nämlich dem Auflegen der Schutzplatte auf dem auf dem ersten Warenträger angeordneten Display mittels der zweiten Vorrichtung,
- Fig. 16: die Vorrichtung gemäß Figur 1 mit der schematischen Darstellung eines weiteren Schrittes des Befestigungsprozesses, nämlich dem Anheben der zweiten Vorrichtung,
- Fig. 17: die Vorrichtung gemäß Figur 1 mit der schematischen Darstellung eines weiteren Schrittes des Befestigungsprozesses, nämlich dem Ausrichten des ersten und zweiten Warenträgers,
- Fig. 18: die Vorrichtung gemäß Figur 1 mit der schematischen Darstellung eines weiteren Schrittes des Befestigungsprozesses, nämlich dem Überführen des ersten Warenträgers in die erste Ausgangsschleuse, dem Überführen des zweiten Warenträgers an die zweite Vorrichtung und dem Nachführen weiterer Warenträger,
- Fig. 19: die Vorrichtung gemäß Figur 1 mit der schematischen Darstellung eines weiteren Schrittes des Befestigungsprozesses, nämlich dem Überführen des ersten Warenträgers in die zweite Ausgangsschleuse, dem Überführen des zweiten Warenträgers in die erste Ausgangsschleuse und dem Nachführen weiterer Warenträger, und
- Fig. 20: die Vorrichtung gemäß Figur 1 mit der schematischen Darstellung eines weiteren Schrittes des Befestigungsprozesses, nämlich dem Ausschleusen des ersten Warenträgers aus der zweiten Ausgangsschleuse und dem nachführen weiterer Warenträger.

In den Figuren bezeichnen gleiche Bezugszeichen gleiche Teile. Zur besseren Übersicht sind nicht sämtliche Bezugszeichen in sämtlichen Figuren angegeben.

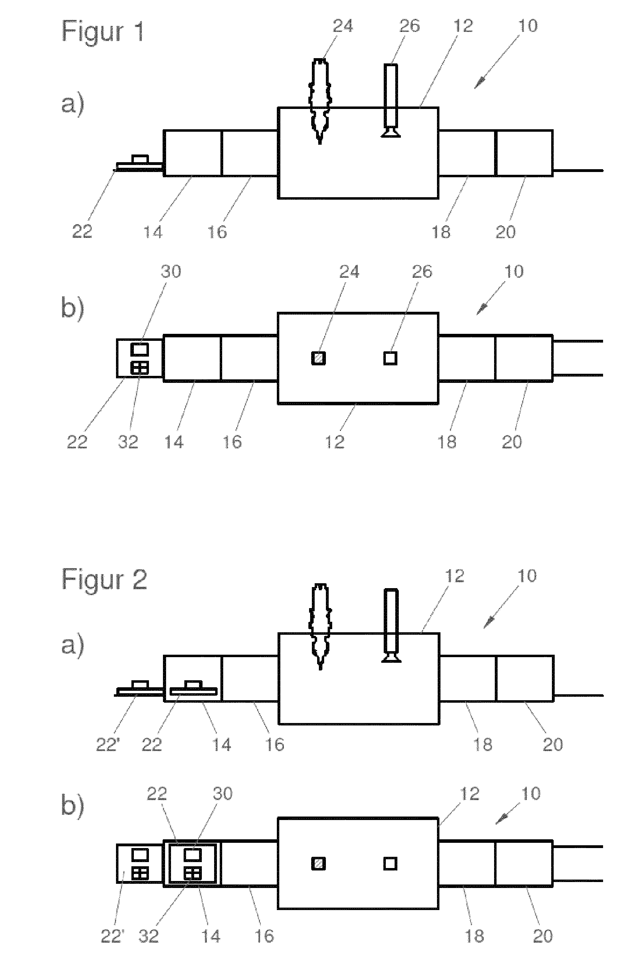

Figur la zeigt eine Seitenansicht, Figur 1b eine Draufsicht auf ein Ausführungsbeispiel einer erfindungsgemäßen Vorrichtung 10 zum Befestigen einer Schutzplatte 32 an einem Display 30, welches insbesondere als Touch-Display ausgebildet ist. Die Schutzplatte 32 kann beispielsweise aus Glas oder Kunststoff gefertigt sein. Wie in Figur 1 dargestellt, können das Display 30 und die Schutzplatte 32 auf einem Warenträger 22 angeordnet sein, auf welchem der Transport durch die Vorrichtung 10 erfolgen kann.

Die Vorrichtung 10 weist eine Vakuumkammer 12 auf, in welcher eine zweite Vorrichtung 26 zum Auflegen der Schutzplatte 32 auf das Display 30 angeordnet ist, welche insbesondere als Greifer, beispielsweise als Greifer mit einem Saugnapf, ausgebildet ist.

Die Vorrichtung 10 weist in der Vakuumkammer 12 weiterhin eine erste Vorrichtung 24 zum Aufbringen eines Bondingmaterials 34 auf das Display 30 auf. Die erste Vorrichtung 24 kann alternativ jedoch auch außerhalb der Vakuumkammer 12 angeordnet sein. Sowohl die zweite Vorrichtung 26 als auch die erste Vorrichtung 24 sind vorteilhafterweise in drei Raumrichtungen verfahrbar.

In der Vakuumkammer 12 ist ein Unterdruck erzeugbar. Insbesondere herrscht in der Vakuumkammer 12 ein Enddruck, welcher vorzugsweise geringer als 40 mbar ist und beispielsweise etwa 30 mbar beträgt.

Um Produkte, beispielsweise mit Hilfe der Warenträger 22, in die Vakuumkammer 12 einbringen zu können, kann die Vorrichtung 10 wenigstens eine Schleuse aufweisen. Wie in dem vorliegenden Ausführungsbeispiel gezeigt, weist die Vorrichtung 10 eine erste Eingangsschleuse 14 und eine zweite Eingangsschleuse 16 auf. Die zweite Eingangsschleuse 16 ist zwischen der ersten Eingangsschleuse 14 und der Vakuumkammer 12 angeordnet. Ein erster einzubringender Warenträger 22 wird zunächst in die erste Eingangsschleuse 14, von dort in die zweite Eingangsschleuse 16 und anschließend in die Vakuumkammer 12 überführt.

In der ersten Eingangsschleuse 14 ist der Druck zwischen dem Atmosphärendruck und einem Zwischendruck einstellbar. Der Zwischendruck kann beispielsweise zwischen etwa 100 mbar und 400 mbar liegen und beispielsweise etwa 200 mbar betragen. In der zweiten Eingangsschleuse 16 ist der Druck vorzugsweise zwischen dem Zwischendruck und dem Enddruck einstellbar, im vorliegenden Ausführungsbeispiel beispielsweise zwischen 200 mbar und 30 mbar.

Um Produkte, wie beispielsweise die Warenträger 22, aus der Vakuumkammer 12 herausbringen zu können, kann die Vorrichtung 10 wenigstens eine Ausgangsschleuse aufweisen. Die Vorrichtung 10 gemäß dem dargestellten Ausführungsbeispiel weist eine erste Ausgangsschleuse 18 und eine zweite Ausgangsschleuse 20 auf. Die erste Ausgangsschleuse 18 ist zwischen der Vakuumkammer 12 und der zweiten Ausgangsschleuse 20 angeordnet. Der Warenträger 22 kann von der Vakuumkammer 12 zunächst in die erste Ausgangsschleuse 18 und von dort in die zweite Ausgangsschleuse 20 und anschließend aus der Vorrichtung 10 herausgeführt werden.

In der ersten Ausgangsschleuse 18 ist der Druck zwischen dem Enddruck der Vakuumkammer 12, welcher beispielsweise etwa 30 mbar beträgt, und einem Zwischendruck einstellbar, welcher beispielsweise zwischen etwa 100 mbar und 400 mbar liegt und beispielsweise etwa 200 mbar betragen kann. In der zweiten Ausgangsschleuse 20 wird der Druck insbesondere zwischen dem Zwischendruck und dem Atmosphärendruck variiert.

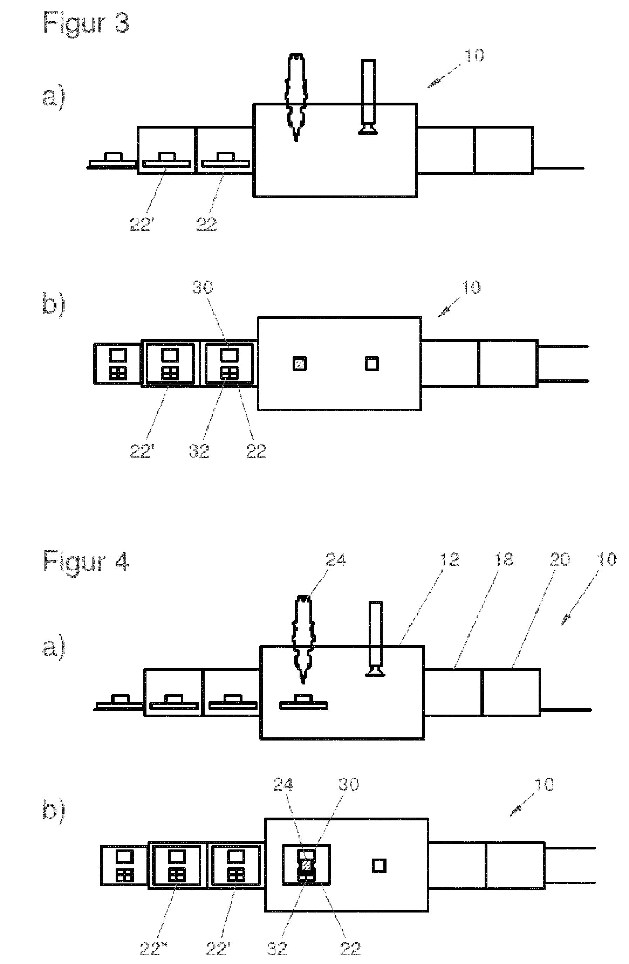

Die Befestigung der Schutzplatte 32 an dem Display 30 kann beispielsweise folgendermaßen erfolgen: Der erste Warenträger 22 transportiert das Display 30 mit der daran anzuordnenden Schutzplatte 32 zur ersten Eingangsschleuse 14 (vgl. Figur 1). Der Warenträger 22 fährt in die erste Eingangsschleuse 14, in welcher Atmosphärendruck herrscht, ein (vgl. Figur 2). Anschließend wird die erste Eingangsschleuse 14 geschlossen und der Druck in der ersten Eingangsschleuse 14 von dem Umgebungsdruck auf den Zwischendruck, beispielsweise auf 200 mbar, reduziert. Gleichzeitig wird in der zweiten Eingangsschleuse 16 der Druck auf den Zwischendruck eingestellt. Anschließend wird der Warenträger 22 von der ersten Eingangsschleuse 14 in die zweite Eingangsschleuse 16 transportiert (vgl. Figur 3). Nachdem die zweite Eingangsschleuse 16 geschlossen wurde, wird in der zweiten Eingangsschleuse 16 der Druck von dem Zwischendruck auf den Enddruck, welcher in der Vakuumkammer 12 herrscht, reduziert, beispielsweise auf etwa 30 mbar. Gleichzeitig kann der Druck in der ersten Eingangsschleuse wieder auf den Umgebungsdruck erhöht werden, um einen zweiten Warenträger 22' in die erste Eingangsschleuse 14 aufnehmen zu können (vgl. Figur 3).

Der Warenträger 22 wird anschließend aus der zweiten Eingangsschleuse 16 in die Vakuumkammer 12 überführt. Dabei wird der Warenträger 22 insbesondere unter der ersten Vorrichtung 24 positioniert (vergleiche Figur 4). Ein Nachführen weiterer Warenträger 22', 22" kann folgendermaßen erfolgen: Der in der ersten Eingangsschleuse 14 befindliche zweite Warenträger 22' kann nach Schließung der zweiten Eingangsschleuse 16 zur Vakuumkammer 12 hin und Erhöhung des Drucks in der zweiten Eingangsschleuse 16 auf den Zwischendruck von der ersten Eingangsschleuse 14 in die zweite Eingangsschleuse 16 überführt werden. Ebenso kann in die frei gewordene erste Eingangsschleuse 14 nach Erhöhung des Drucks auf Atmosphärendruck der dritte Warenträger 22" eingeführt werden (vgl. Figur 4).

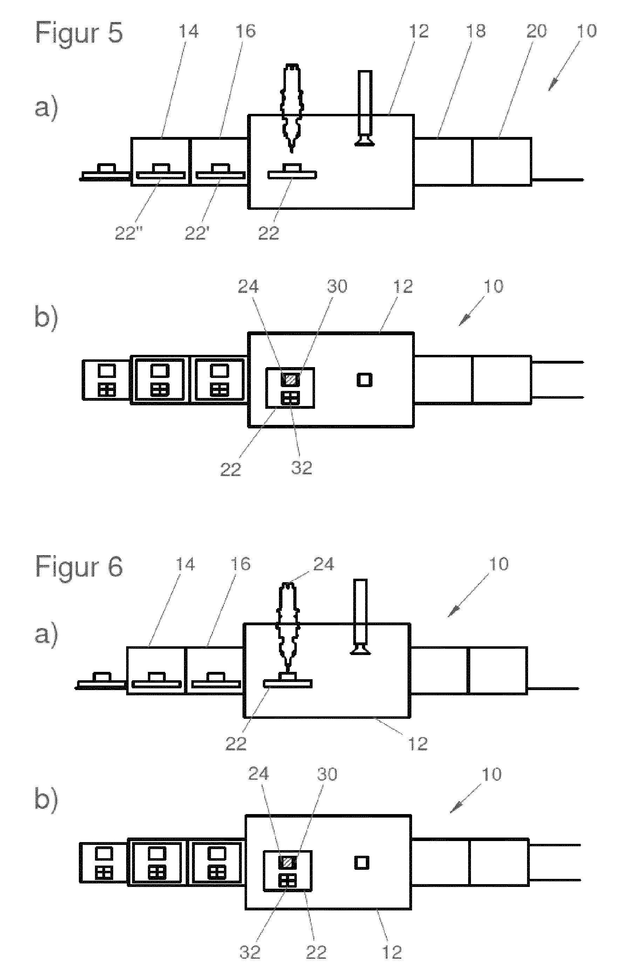

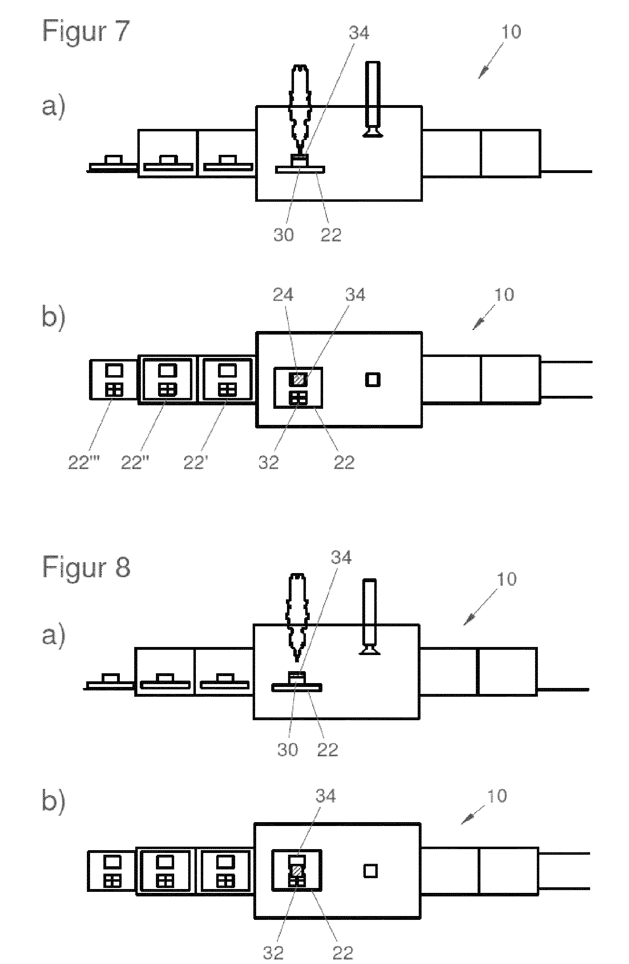

Die erste Vorrichtung 24 wird eventuell quer zur Bewegungsrichtung des Warenträgers 22 derart ausgerichtet, dass die erste Vorrichtung 24 exakt oberhalb des Displays angeordnet ist (vergleiche Figur 5, insbesondere Figur 5b). Falls nötig, wird die erste Vorrichtung 24 abgesenkt (vergleiche Figur 6). Schließlich trägt die erste Vorrichtung 24 das Bondingmaterial 34 auf das Display 30 auf (vergleiche Figur 7). Das Bondingmaterial 34 wird dabei insbesondere in flüssiger oder pastöser Form aufgetragen. Bei dem Bondingmaterial 34 handelt es sich beispielsweise um einen Einkomponenten- oder um einen Zweikomponentenkleber. In einer bevorzugten Ausführungsform kann das Display 30 zuvor mittels einer dritten Vorrichtung vermessen werden, um die benötigte Menge an Bondingmaterial 34 vorab bestimmen zu können. Anschließend kann die erste Vorrichtung 24 wieder angehoben werden (vergleiche Figur 8) und der Warenträger 22 derart ausgerichtet werden, dass er innerhalb der Vorrichtung 10 weitertransportiert werden kann.

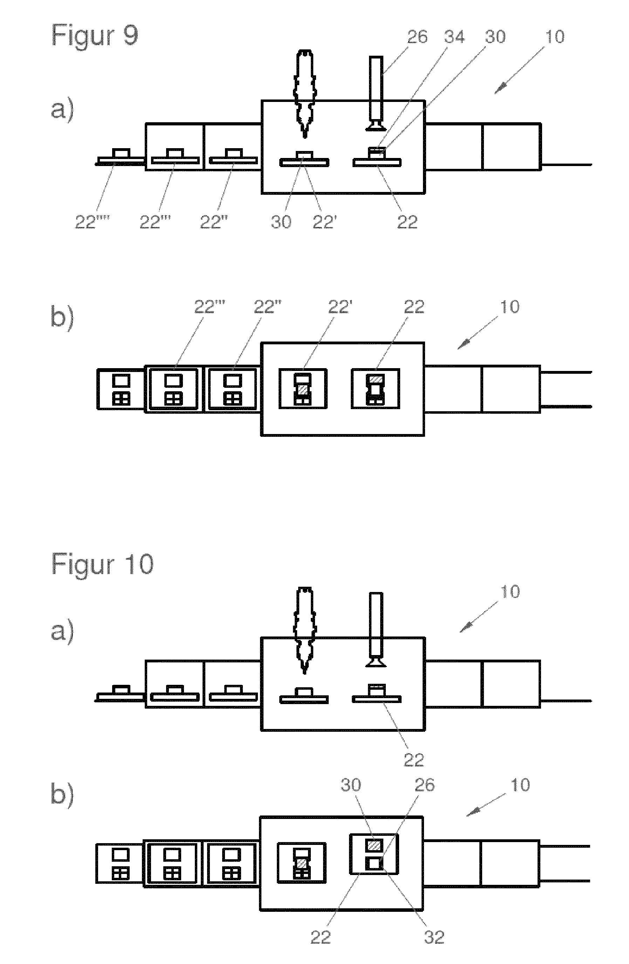

Anschließend wird der Warenträger 22 zu der zweiten Vorrichtung 26 transportiert (vergleiche Figur 9). Dabei kann gleichzeitig der in der zweiten Eingangsschleuse 16 positionierte Warenträger 22' unter die erste Vorrichtung 24 überführt werden, wozu der Druck in der zweiten Eingangsschleuse 16 von dem Zwischendruck wieder auf den in der Vakuumkammer 12 herrschenden Enddruck abgesenkt wurde. Während der Bearbeitung der Warenträger 22, 22' in der Vakuumkammer 12 kann bereits der dritte Warenträger 22" in die frei gewordene zweite Eingangsschleuse 16 und ein vierter Warenträger 22''' anschließend in die frei gewordene erste Eingangsschleuse 14 überführt werden (vergleiche Figur 9).

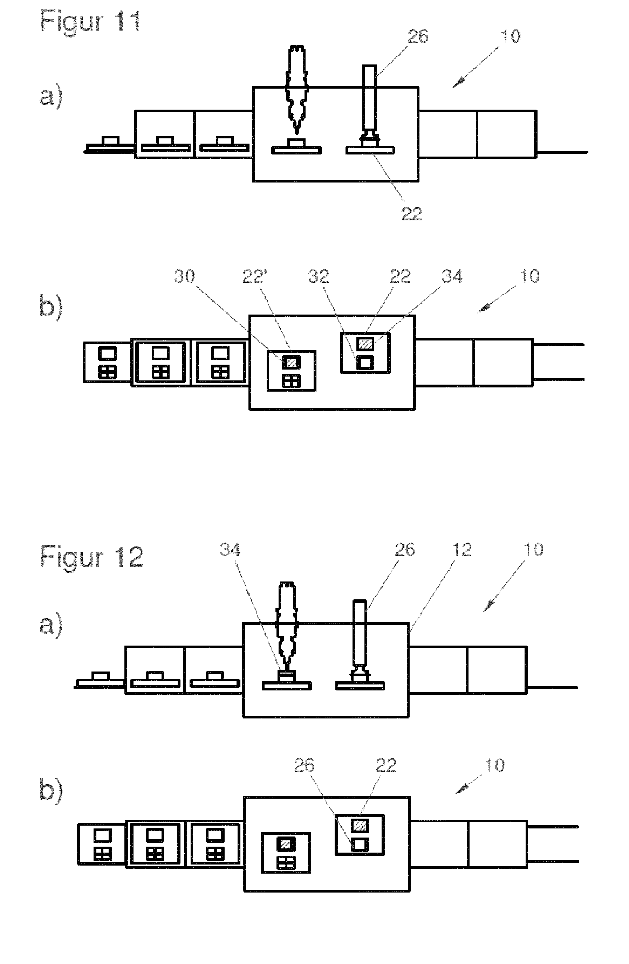

Der Warenträger 22 wird unterhalb der zweiten Vorrichtung 26 derart ausgerichtet, dass die zweite Vorrichtung 26 direkt über der zu greifenden Schutzplatte 32 angeordnet ist (vergleiche Figur 10, insbesondere Figur 10b). Anschließend wird die zweite Vorrichtung 26 abgesenkt, um die Schutzplatte 32 zu greifen (vergleiche Figur 11).

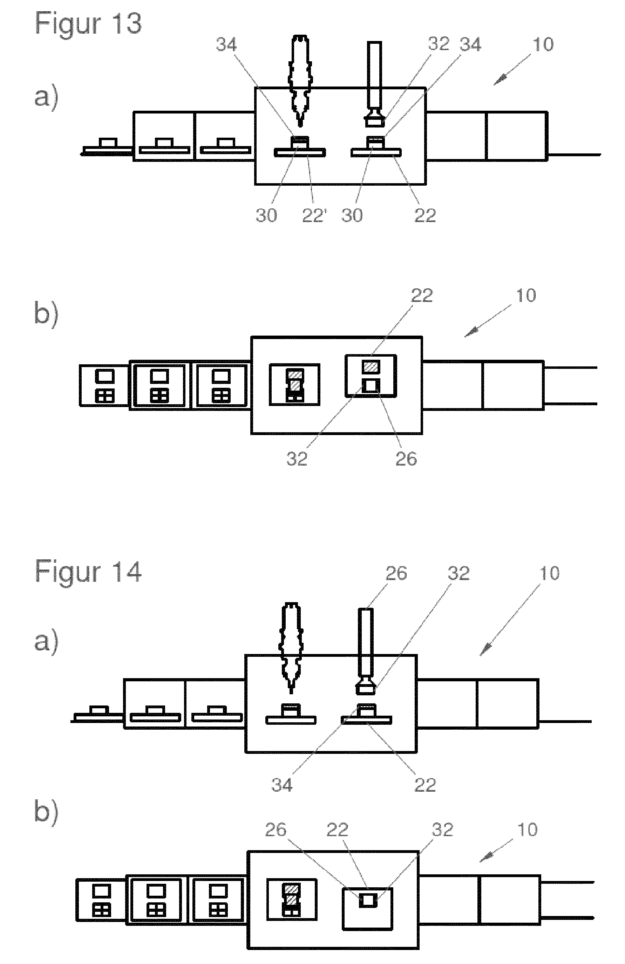

Während dieses Greifprozesses, kurz davor oder kurz danach, kann von der ersten Vorrichtung 24 auf das auf dem nachfolgenden Warenträger 22' angeordneten Display 30 wiederum Bondingmaterial 34 aufgebracht werden (vergleiche Figur 12) sowie der Warenträger 22' wieder entsprechend ausgerichtet werden (vergleiche Figur 13).

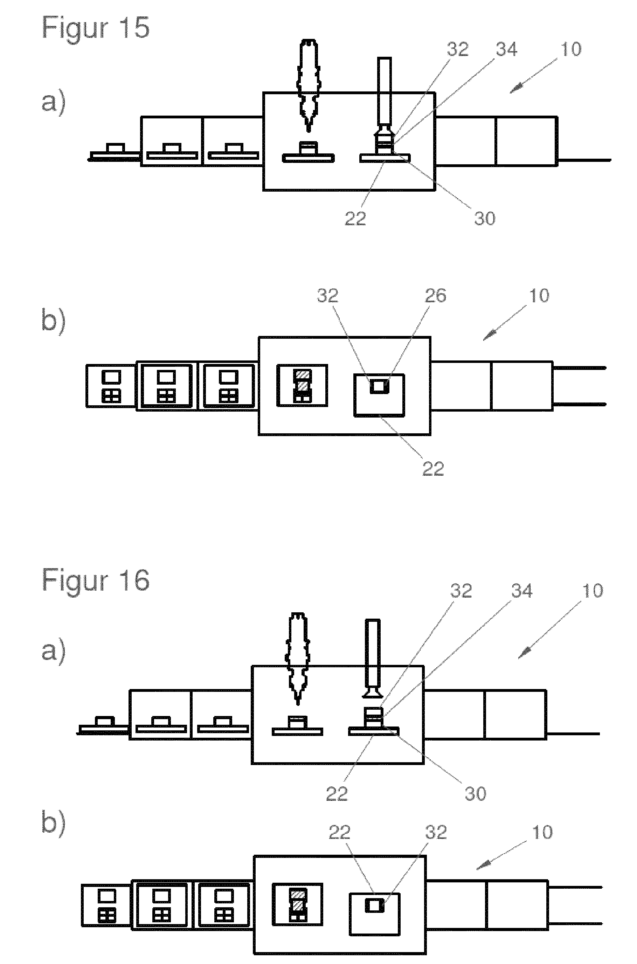

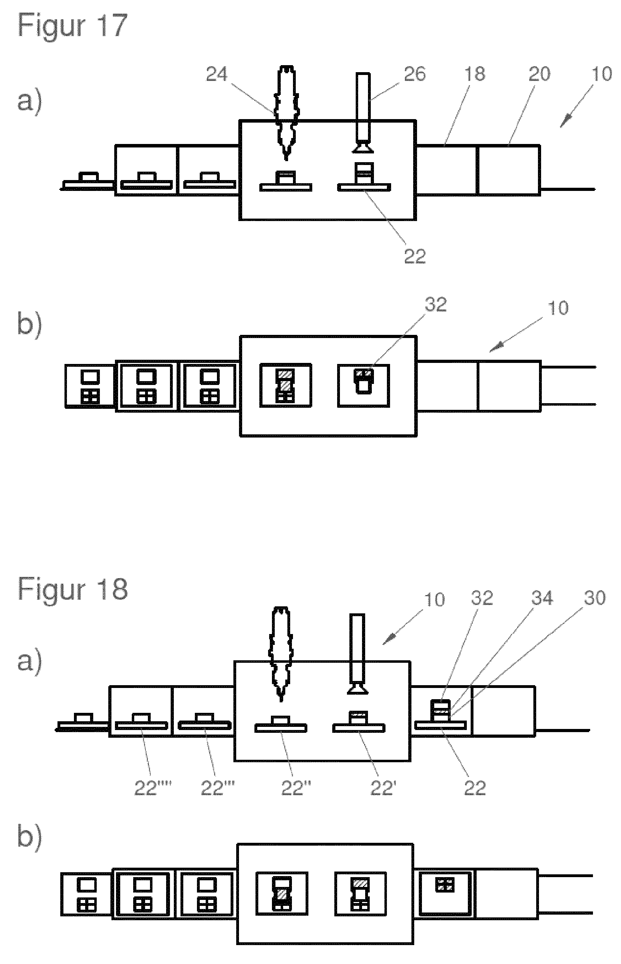

Die zweite Vorrichtung 26 hebt währenddessen die Schutzplatte 32 an (vergleiche Figur 13) und transportiert sie oberhalb des Displays 30 (vergleiche Figur 14, insbesondere Figur 14b). Anschließend senkt sich die zweite Vorrichtung 26 über dem Display 30, um die Schutzplatte 32 auf das Display 30 aufzulegen. Dabei kann die zweite Vorrichtung 26 soweit abgesenkt werden, bis die Schutzplatte 32 auf das Display 30, insbesondere auf Abstandshalter des Displays 30, aufgesetzt wird oder alternativ die Schutzplatte 32 aus geringer Höhe, beispielsweise aus einer Höhe von weniger als 1 mm, auf das Display 30 fallen lassen (vergleiche Figur 15). Nachdem die zweite Vorrichtung 26 wieder angehoben wurde (vergleiche Figur 16), wird der Warenträger 22 wieder in Transportrichtung ausgerichtet (vergleiche Figur 17) und anschließend in die erste Ausgangsschleuse 18, welche zwischenzeitlich auf den Enddruck gebracht wurde, überführt (vergleiche Figur 18). Gleichzeitig kann aus der zweiten Eingangsschleuse 16, welche ebenfalls auf den Enddruck gebracht wurde, der dritte Warenträger 22'' in die Vakuumkammer 12 eingeführt werden. Anschließend kann in die frei gewordene zweite Eingangsschleuse 16 der Warenträger 22''' aus der ersten Eingangsschleuse 14 und anschließend ein weiterer Warenträger 22'''' in die frei gewordene erste Eingangsschleuse 14 überführt werden (vergleiche Figur 18).

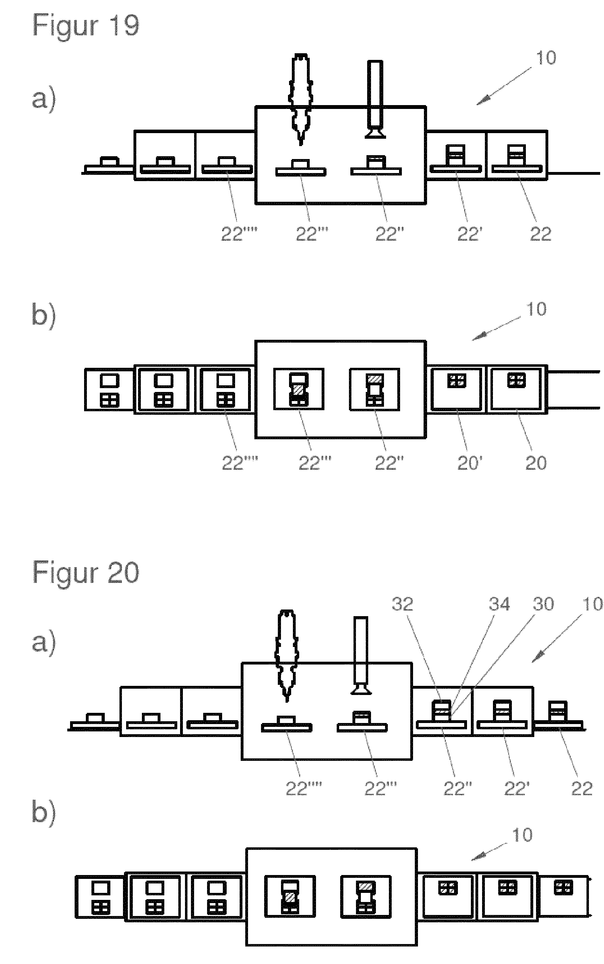

In der ersten Ausgangsschleuse 18 wird der Druck von dem Enddruck auf den Zwischendruck gebracht. Gleichzeitig wird der Druck in der zweiten Ausgangsschleuse 20 ebenfalls auf den Zwischendruck gebracht, während innerhalb der Vakuumkammer 12 die nachfolgenden Warenträger 22', 22'' bereits in die gewünschten Positionen relativ zur ersten Vorrichtung 24 und zur zweiten Vorrichtung 26 ausgerichtet und entsprechend bearbeitet werden. Nachdem die entsprechende Bearbeitung der Displays 30 und Schutzplatten 32 auf den Warenträgern 22', 22'' in der Vakuumkammer 12 erfolgt ist, kann der Warenträger 22 aus der ersten Ausgangsschleuse 18 in die zweite Ausgangsschleuse 20 überführt werden. Nachfolgende Warenträger 22', 22'', 22''', 22'''' rücken jeweils eine Position auf (vergleiche Figur 19).

Nachdem erneut in der Vakuumkammer 12 die entsprechende Bearbeitung an den dort angeordneten Displays 30 und Schutzplatten 32 auf den Warenträgern 22'', 22''' erfolgt ist, können wiederum sämtliche Warenträger 22 eine Position weiterrücken.

Insbesondere kann der in der zweiten Ausgangsschleuse 20 angeordnete Warenträger 22 aus der Vorrichtung 10 entfernt werden.

Bereits beim Überführen des Warenträgers 22 aus der Vakuumkammer 12 in die erste Ausgangsschleuse 18 und Erhöhung des Drucks in der ersten Ausgangsschleuse 18 werden eventuell in dem Bondingmaterial 34 vorhandene Luftblasen auf einen Bruchteil verringert. Dieser Prozess wird bei Überführen des Warenträgers 22 in die zweite Ausgangsschleuse 20 und Erhöhung des Drucks in der zweiten Ausgangsschleuse auf Atmosphärendruck weiter verstärkt, so dass nahezu keine Lufteinschlüsse in dem Bondingmaterial 34 zu sehen sind.

Nach Entnahme des Warenträgers 22 aus der zweiten Ausgangsschleuse 20 kann das Bondingmaterial 34 ausgehärtet werden, beispielsweise mittels UV-Licht oder Wärme.

### Bezugszeichenliste

- 10: Vorrichtung
- 12: Vakuumkammer
- 14: erste Eingangsschleuse
- 16: zweite Eingangsschleuse
- 18: erste Ausgangsschleuse
- 20: zweite Ausgangsschleuse
- 22: Warenträger
- 24: erste Vorrichtung
- 26: zweite Vorrichtung
- 30: Display
- 32: Schutzplatte
- 34: Bondingmaterial

## Patentansprüche

1. Verfahren zum Befestigen einer Schutzplatte (32) an einem Display (30), insbesondere einem Touch-Display, mit den Schritten:
a) Aufbringen eines Bondingmaterials (34) auf das Display (30) und
b) Auflegen der Schutzplatte (32) auf das Display (30), wobei der Schritt des Auflegens der Schutzplatte (32) auf das Display (30) unter Unterdruck erfolgt, wobei das Display (30) Abstandhalter für die Schutzplatte (32) aufweist, welche vor dem Aufbringen des Bondingmaterials (34) vermessen werden, um das benötigte Volumen des Bondingmaterials (34) zu bestimmen.

2. Verfahren nach Anspruch 1,
**dadurch gekennzeichnet, dass** der Unterdruck geringer als 40 mbar ist und beispielsweise etwa 30 mbar beträgt, vorteilhafterweise geringer als 10 mbar ist und beispielsweise etwa 5 mbar beträgt.

3. Verfahren nach einem der vorhergehenden Ansprüche,
**dadurch gekennzeichnet, dass** auch der Schritt des Aufbringens des Bondingmaterials (34) auf das Display (30) unter Unterdruck erfolgt.

4. Verfahren nach einem der vorhergehenden Ansprüche,
**dadurch gekennzeichnet, dass** das Auflegen der Schutzplatte (32) auf das Display (30) durch Aufsetzen oder Fallenlassen der Schutzplatte (32) auf das Display (30) aus geringer Höhe, beispielsweise aus einer Höhe von weniger als 5 mm, vorzugsweise aus einer Höhe von weniger als 1 mm, erfolgt.

5. Verfahren nach einem der vorhergehenden Ansprüche,
**dadurch gekennzeichnet, dass** das Bondingmaterial (34) ausgehärtet wird, vorzugsweise mit UV-Licht oder Wärme.

6. Vorrichtung zum Befestigen einer Schutzplatte (32) an einem Display (30), insbesondere einem Touch-Display, mit einer ersten Vorrichtung (24) zum Aufbringen des Bondingmaterials (34) auf das Display (30) und einer zweiten Vorrichtung (26) zum Auflegen der Schutzplatte (32) auf das Display (30),
**dadurch gekennzeichnet, dass** die zweite Vorrichtung (26) in einer Vakuumkammer (12) angeordnet ist, in welcher ein Enddruck erzeugbar ist, welcher kleiner ist als der Druck außerhalb der Vakuumkammer (12), wobei das Display (30) Abstandhalter für die Schutzplatte (32) aufweist, und dass die Vorrichtung eine dritte Vorrichtung zum Ausmessen der Abstandhalter und zum Bestimmen des benötigten Volumens an Bondingmaterial (34) aufweist.

7. Vorrichtung nach Anspruch 6,
**dadurch gekennzeichnet, dass** der Enddruck der Vakuumkammer (12) kleiner als 40 mbar ist und beispielsweise etwa 30 mbar beträgt, vorteilhafterweise geringer als 10 mbar ist und beispielsweise etwa 5 mbar beträgt.

8. Vorrichtung nach einem der Ansprüche 6 bis 7,
**dadurch gekennzeichnet, dass** zusätzlich auch die erste Vorrichtung (24) in der Vakuumkammer (12) angeordnet ist.

9. Vorrichtung nach einem der Ansprüche 6 bis 8,
**dadurch gekennzeichnet, dass** die Vorrichtung (10) ein Warentransportsystem aufweist, mittels welchem ein oder mehrere Displays (30) und die daran anzubringenden Schutzplatten (32) der Vakuumkammer (12) zugeführt werden.

10. Vorrichtung nach einem der Ansprüche 6 bis 9,
**dadurch gekennzeichnet, dass** die Vakuumkammer (12) eine Eingangsöffnung aufweist, vor welcher wenigstens eine Eingangsschleuse (14, 16) angeordnet ist.

11. Vorrichtung nach einem der Ansprüche 6 bis 10,
**dadurch gekennzeichnet, dass** die Vakuumkammer (12) eine Ausgangssöffnung aufweist, hinter welcher wenigstens eine Ausgangsschleuse (18, 20) angeordnet ist.

12. Vorrichtung nach einem der Ansprüche 6 bis 11,
**dadurch gekennzeichnet, dass** vor der Eingangsöffnung eine erste und eine zweite Eingangsschleuse (14, 16) angeordnet sind, wobei der Druck in der ersten Eingangsschleuse (14) zwischen dem Umgebungsdruck und einem Zwischendruck einstellbar ist, der Druck in der zweiten Eingangsschleuse (16) zwischen dem Zwischendruck und dem Enddruck der Vakuumkammer (12) einstellbar ist und der Zwischendruck kleiner als der Umgebungsdruck und größer als der Enddruck der Vakuumkammer (12) ist.

13. Vorrichtung nach einem der Ansprüche 6 bis 12,
**dadurch gekennzeichnet, dass** hinter der Ausgangsöffnung eine erste und eine zweite Ausgangsschleuse (18, 20) angeordnet sind, wobei der Druck in der ersten Ausgangsschleuse (18) zwischen einem Zwischendruck und dem Enddruck der Vakuumkammer einstellbar ist, der Druck in der zweiten Ausgangsschleuse (20) zwischen dem Umgebungsdruck und dem Zwischendruck einstellbar ist, und der Zwischendruck kleiner als der Umgebungsdruck und größer als der Enddruck der Vakuumkammer (12) ist.

14. Vorrichtung nach einem der Ansprüche 6 bis 13,
**dadurch gekennzeichnet, dass** der Zwischendruck zwischen etwa 100 mbar bis 400 mbar, beispielsweise etwa 200 mbar, beträgt.

## Claims

1. Method for the attachment of a protective plate (32) on a display (30), in particular a touch display, having the steps:
a) applying a bonding material (34) to the display (30) and
b) laying the protective plate (32) onto the display (30), wherein the step of laying the protective plate (32) onto the display (30) takes place under vacuum, wherein the display (30) has spacers for the protective plate (32) which are measured before the application of the bonding material (34) in order to determine the required volume of bonding material (34).

2. Method according to claim 1,
**characterised in that**
the vacuum is lower than 40mbar and, for example, is approximately 30mbar, is advantageously lower than 10mbar and, for example, is approximately 5mbar.

3. Method according to one of the preceding claims,
**characterised in that**
the step of applying the bonding material (34) to the display (30) also takes place under vacuum.

4. Method according to one of the preceding claims,
**characterised in that**
the laying of the protective plate (32) onto the display (30) takes place by positioning or dropping the protective plate (32) onto the display (30) from a low height, for example from a height of less than 5mm, preferably from a height of less than 1mm.

5. Method according to one of the preceding claims,
**characterised in that**
the bonding material (34) is hardened, preferably with UV light or heat.

6. Device for the attachment of a protective plate (32) on a display (30), in particular a touch display, having a first device (24) for applying the bonding material (34) to the display (30) and a second device (26) for laying the protective plate (32) onto the display (30),
**characterised in that**
the second device (26) is arranged in a vacuum chamber (12) in which an ultimate pressure can be created which is lower than the pressure outside the vacuum chamber (12), wherein the display (30) has spacers for the protective plate (32) and the device has a third device to measure the spacers and to determine the required volume of bonding material (34).

7. Device according to claim 6,
**characterised in that**
the ultimate pressure of the vacuum chamber (12) is lower than 40mbar and, for example, is approximately 30mbar, advantageously is lower than 10mbar and, for example, is approximately 5mbar.

8. Device according to one of claims 6 to 7,
**characterised in that**
in addition, the first device (24) is also arranged in the vacuum chamber (12).

9. Device according to one of claims 6 to 8,
**characterised in that**
the device (10) has a goods transportation system, by means of which one or more displays (30) and the protective plates (32) to be applied thereto are supplied to the vacuum chamber (12).

10. Device according to one of claims 6 to 9,
**characterised in that**
the vacuum chamber (12) has an input port, in front of which at least one input air lock (14, 16) is arranged.

11. Device according to one of claims 6 to 10,
**characterised in that**
the vacuum chamber (12) has an output port, behind which at least one output air lock (18, 20) is arranged.

12. Device according to one of claims 6 to 11,
**characterised in that**
a first and a second input air lock (14, 16) are arranged in front of the input port, wherein the pressure in the first input air lock (14) can be adjusted between the ambient pressure and an intermediate pressure, the pressure in the second input air lock (16) can be adjusted between the intermediate pressure and the ultimate pressure of the vacuum chamber (12) and the intermediate pressure is lower than the ambient pressure and higher than the ultimate pressure of the vacuum chamber (12).

13. Device according to one of claims 6 to 12,
**characterised in that**
a first and a second output air lock (18, 20) are arranged behind the output port, wherein the pressure in the first output air lock (18) can be adjusted between an intermediate pressure and the ultimate pressure of the vacuum chamber, the pressure in the second output air lock (20) can be adjusted between the ambient pressure and the intermediate pressure, and the intermediate pressure is lower than the ambient pressure and higher than the ultimate pressure of the vacuum chamber (12).

14. Device according to one of claims 6 to 13,
**characterised in that**
the intermediate pressure is between approximately 100mbar and 400mbar, for example approximately 200mbar.

## Revendications

1. Procédé permettant de fixer une plaque de protection (32) sur un écran (30), en particulier, un écran tactile comprenant les étapes consistant à :
a) appliquer un matériau de collage (34) sur l'écran (30) et,
b) poser la plaque de protection (32) su l'écran (30),
l'étape consistant à poser la plaque de protection (32) sur l'écran étant effectuée sous dépression, l'écran (30) comprenant des écarteurs de la plaque de protection (32) qui sont mesurés avant l'application du matériau de collage (34) pour pouvoir déterminer le volume nécessaire de ce matériau de collage (34).

2. Procédé conforme à la revendication 1,
**caractérisé en ce que**
la dépression est inférieure à 40 mbar et est par exemple égale à environ 30 mbar, et est de préférence inférieure à 10 mbar et par exemple égale à environ 5 mbar.

3. Procédé conforme à l'une des revendications précédentes,
**caractérisé en ce que**
l'étape d'application du matériau de collage (34) sur l'écran (30) est également effectuée sous dépression.

4. Procédé conforme à l'une des revendications précédentes,
**caractérisé en ce que**
la pose de la plaque de protection (32) sur l'écran (30) est effectuée en mettant en place ou en laissant tomber la plaque de protection (32) sur l'écran (30) d'une faible hauteur, par exemple d'une hauteur de moins de 5 mm, de préférence d'une hauteur de moins de 1 mm.

5. Procédé conforme à l'une des revendications précédentes,
**caractérisé en ce que**
le matériau de collage (34) est durci, par exemple sous l'action de lumière UV ou thermiquement.

6. Dispositif permettant de fixer une plaque de protection (32) sur un écran (30) en particulier un écran tactile comprenant un premier dispositif (24) permettant d'appliquer le matériau de collage (34) sur l'écran (30) et un second dispositif (26) permettant de poser la plaque de protection (32) sur l'écran (30),
**caractérisé en ce que**
le second dispositif (26) est monté dans une chambre à vide (12) dans laquelle on peut obtenir une pression finale qui est inférieure à la pression régnant à la partie externe de la chambre à vide (12), l'écran (30) comprenant des écarteurs de la plaque de protection (32), et le dispositif comprend un troisième dispositif permettant de mesurer les écarteurs et de déterminer le volume de matériau de collage (34) nécessaire.

7. Dispositif conforme à la revendication 6,
**caractérisé en ce que**
la pression finale de la chambre à vide (12) est inférieure à 40 mbar et est par exemple de l'ordre de 30 mbar, de façon préférentielle, inférieure à 10 mbar et par exemple de l'ordre de 5 mbar.

8. Dispositif conforme à l'une des revendications 6 et 7,
**caractérisé en ce que**
le premier dispositif (24) est en outre également monté dans la chambre à vide (12).

9. Dispositif conforme à l'une des revendications 6 à 8,
**caractérisé en ce que**
le dispositif (10) comprend un système de transport d'articles au moyen duquel un ou plusieurs écran(s) (30) et les plaques de protection (32) devant être posées sur ceux-ci sont transférés dans la chambre à vide (12).

10. Dispositif conforme à l'une des revendications 6 à 9,
**caractérisé en ce que**
la chambre à vide (12) comprend une ouverture d'entrée à l'avant de laquelle est monté au moins un sas d'entrée (14, 16).

11. Dispositif conforme à l'une des revendications 6 à 10,
**caractérisé en ce que**
la chambre à vide (12) comprend une ouverture de sortie à l'arrière de laquelle est monté au moins un sas de sortie (18, 20).

12. Dispositif conforme à l'une des revendications 6 à 11,
**caractérisé en ce qu'**
à l'avant de l'ouverture d'entrée sont montés un premier et un second sas d'entrée (14, 16), la pression régnant dans le premier sas d'entrée (14) pouvant être réglée entre la pression ambiante et une pression intermédiaire, la pression régnant dans le second sas d'entrée (16) pouvant être réglée entre la pression intermédiaire et la pression finale dans la chambre à vide (12) et la pression intermédiaire étant inférieure à la pression ambiante et supérieure à la pression finale dans la chambre à vide (12).

13. Dispositif conforme à l'une des revendications 6 à 12,
**caractérisé en ce que**
à l'arrière de l'ouverture de sortie sont monté un premier et un second sas d'entrée (18, 20), la pression régnant dans le premier sas d'entrée (18) pouvant être réglée entre une pression intermédiaire et la pression finale dans la chambre à vide, la pression régnant dans le second sas d'entrée (20) pouvant être réglée entre la pression ambiante et la pression intermédiaire, et la pression intermédiaire étant inférieure à la pression ambiante et supérieure à la pression finale dans la chambre à vide (12).

14. Dispositif conforme à l'une des revendications 6 à 13,
**caractérisé en ce que**
la pression intermédiaire est comprise entre environ 100 mbar et 400 mbar, et est par exemple égale à environ 200 mbar.
